# EUROPÄISCHE PATENTSCHRIFT

(11) **EP 0 345 765 B1**
(45) Veröffentlichungstag und Bekanntmachung des Hinweises auf die Patenterteilung: **04.08.1993**
(21) Anmeldenummer: 89110320.2
(22) Anmeldetag: 07.06.1989
(51) Int. Cl.: C09B 67/06, C09B 67/42, D06L 3/12, B01D 1/18

(54) **Verfahren zur Herstellung von Granulaten**
Process for the manufacture of granulates
Procédé de fabrication de granulés

(30) Priorität: 08.06.1988 CH 2180/88
(43) Veröffentlichungstag der Anmeldung: 13.12.1989
(73) Patentinhaber: CIBA-GEIGY AG, 4002 Basel (CH)
(72) Erfinder: Neumann, Konrad, Dr., D-7888 Rheinfelden (DE); Hayer, Angelika, CH-4125 Riehen (CH); Rehmann, Wolfgang, CH-4058 Basel (CH); Brücker, Horst Olaf, D-7888 Rheinfelden 4 (DE)
(74) Vertreter: TER MEER STEINMEISTER & PARTNER GbR

(56) Entgegenhaltungen:
- DE-A- 1 000 337
- DE-A- 2 122 662
- FR-A- 1 551 263
- FR-A- 1 581 900
- FR-A- 2 095 903
- FR-A- 2 176 040
- FR-A- 2 388 028
- GB-A- 1 254 730
- US-A- 2 574 597

## Beschreibung

Die vorliegende Erfindung betrifft ein Verfahren zur Herstellung von Granulaten, die nach dem Verfahren hergestellten Granulate, sowie deren Verwendung zur Bereitung vom Färbebädern, Klotzflotten oder Druckpasten zum Färben, Bedrucken, Bleichen bzw. Aufhellen von Textilmaterial.

Granulate weisen gegenüber pulverförmigen Handelsformen eine Reihe von Vorteilen auf. So sind diese insbesondere staubarm bis staubfrei, haben ein hohes Schüttgewicht und sind rieselfähig. Aufgrund dieser Vorteile haben Granulierverfahren inzwischen auch in Bereich der Farbstofformulierung eine breite Anwendung gefunden. Wichtige Granulierverfahren sind z.B. die Sprüh- und Aufbaugranulierung oder auch die Schmelzgranulierung, sowie die Granulierung im Wirbelbett.

Mit der Entwicklung leistungsfähiger Sprühtrockner konnte sich die Sprühgranulierung in den letzten Jahren in steigendem Mass gegenüber konventionellen Granulier- und Trocknungsverfahren durchsetzen. Vor allem die kontinuierliche Arbeitsweise, wie auch der hohe Produktdurchsatz sind die wesentlichen Vorteile dieses Trocknungsverfahrens. Nachteilig ist jedoch, dass zum Teil sehr grosse Mengen Lösungsmittel, vor allem Wasser, unter erheblichem Energieaufwand verdampft werden müssen um ein trockenes Granulat zu erhalten und dass vielfach ein nicht hinreichend druckstabiles und abriebfestes eher poröses Granulat entsteht, so dass die Granulate während des Transports zerstört werden bzw. sich ein feiner Abrieb bildet, der sich bei der Anwendung derartiger Produkte, z.B. in der Färberei, als äusserst störend bemerkbar macht.

Aus der US-A-2 574 597 ist ein Verfahren zur Sprühtrocknung durch Zerstäubung an einer rotierenden Scheibe bekannt, das bei konstanter Temperatur und Anteilen von ≧ 25 an Ligninsulfonaten Granulate mit einem Ligninsulfonat-Film an der Oberfläche erzeugt. Weiterhin ist aus der FR-A-2 388 028 ein Verfahren bekannt, worin, unter Zuhilfenahme von wasserlöslichen Polymeren, Dispersionen mit bis zu 25 % Feststoffanteil sprühgetrocknet werden können.

Es wurde nun überraschenderweise gefunden, dass bei Verwendung spezieller Dispergatoren eine pump- und sprüh- bzw. zerstäubbare wässrige Suspension mit hohem Feststoffgehalt erhalten wird, mit der, bei Einhaltung einer bestimmten Produktrestfeuchte überraschend stabile Granulate hergestellt werden können, die die genannten Nachteile nicht aufweisen; diese Granulate sind staubfrei, freifliessend, verklumpen nicht, sind benetzbar und gut löslich bzw. dispergierbar in Wasser und zeichnen sich durch ein hohes Schüttgewicht, eine hohe mechanische Festigkeit, Druckstabilität, hohe Abriebfestigkeit und gute Rieselfähigkeit aus.

Gegenstand der vorliegenden Erfindung ist somit ein Verfahren zur Herstellung von Granulaten durch Sprühtrocknung einer wässrigen Suspension enthaltend mindestens einen Farbstoff, optischen Aufheller oder Photoaktivator, anorganische und/oder organische Salze und einen Dispergator sowie gegebenenfalls weitere Hilfs- und/oder Coupagemittel, dadurch gekennzeichnet, dass die Suspension als Dispergator mindestens 1 bis 30 Gew.%, bezogen auf den Feststoffgehält, eines Kondensationsproduktes aus Naphthalinsulfonsäure und Formaldehyd enthält, der Feststoffgehalt der Suspension 30-70 % beträgt, die Trocknungstemperaturen so gewählt werden, dass die Restfeuchte der erhaltenen Granulate unter 4 %liegt, der Speisedruck 20-150 bar beträgt, zur Sprühtrocknung Drallkammerdüsen verwendet werden und die wässrige Suspension frei von Poly-(vinylalkohol), Poly-(N-vinyl-α-pyrrolidon) oder Alkalimetallsalzen einer Polyacryloder Polymethacrylsäure mit einem durchschnittlichen Molekulargewicht von mindestens 10000 ist.

Gegenstand der Erfindung sind ferner die nach dem erfindungsgemässen Verfahren erhältlichen Farbstoff-, Photoaktivator- bzw. optische Aufhellergranulate.

Als Farbstoffe kommen beispielsweise anionische und kationische Farbstoffe, wie Metallkomplex-, Chromierungs-, Entwicklungs- und Beizenfarb-stoffe sowie vor allem Reaktivfarbstoffe in Frage. Es handelt sich insbesondere um sulfonsäure- bzw. carbonsäuregruppenhaltige metallfreie oder metallhaltige und metallisierbare Mono-, Dis- und Polyazofarbstoffe, Pyrazolon-, Thioxanthon-, Oxazin-, Stilben-, Formazanfarbstoffe, Anthrachinon-, Nitro-, Methin-, Triphenylmethan-, Xanthon-, Naphthazarin, Styryl-, Azastyryl-, Naphthoperinon-, Chinophthalon- und Phthalocyaninfarbstoffe, sowie vorzugsweise um solche Farbstoffe, die mindestens einen faserreaktiven Rest im Farbstoffmolekül aufweisen.

Bei den anionischen Farbstoffen handelt es sich insbesondere um die Alkalisalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono-und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylamino-anthrachinon-2-sulfonsäuren und als Phthalocyaninfarbstoffe besonders sulfierte Kupferphthalocyanine oder Phthalocyaninarylamide zu erwähnen.

Als Metallkomplexfarbstoffe kommen vorzugsweise sulfonsäure- bzw. carbonsäuregruppenhaltige Metallkomplexfarbstoffe, beispielsweise 1:1 oder 1:2 Metallkomplexe von Azo- oder Azomethinfarbstoffen oder metallisierte Phthalocyanine, insbesondere Kupfer-und Nickelphthalocyanine, in Betracht. Bei den 1:1 und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o′-hydroxy, o-Hydroxy-o′-amino- oder o,o′-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon-oder Benzol-azo-acetessigsäureamid-Typs, wobei diese Gruppierungen unsubstituiert oder auch substituiert sein können. Als Substituenten kommen z.B. in Betracht: gegebenenfalls substituierte Sulfonsäureamide oder Sulfone, Halogen oder Nitro.

Die erfindungsgemäss verwendbaren Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-β-oder -γ-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Aethyl, Propyl, Butyl, oder niedere Hydroxyalkylgruppen, wie 2-Hydroxyäthyl, 2-Hydroxypropyl, 3-Hydroxypropyl.

Beim vorliegenden Verfahren verwendet man die sulfonsäuregruppenhaltigen Azofarbstoffe vorteilhaft in Form ihrer Hetallsalze, z.B. der Kaliumoder vor allem Natriumsalze.

Als geeignete faserreaktive Gruppen enthalten die Reaktivfarbstoffe z.B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-Chlorbenzthiazolyl-, Chloracetylaminogruppen oder α,β-Dibrompropionylaminogruppen.

Des weiteren kommen als faserreaktive Gruppen z.B. noch in Frage Halogencyclobutan-, Mono- oder Bis-(γ-Halogen-β-hydroxypropyl)-aminogruppen, β-Halogenäthylsulfamidreste, β-Halogenäthoxygruppen, β-Halogenäthylmercaptogruppen, γ-Halogen-β-hydroxy-propylsulfamidreste oder 2,3-Epoxypropylgruppen.

Bei den basischen Farbstoffen handelt es sich um die gebräuchlichen Salze und Metallhalogenid-, beispielsweise Zinkchlorid-Doppelsalze der bekannten kationischen Farbstoffe, insbesondere der Methin- bzw. Azamethinfarbstoffe, die z.B. einen Indolinium-, Pyrazolium-, Imidazolium-, Triazolium-, Tetrazolium-, Oxadiazolium-, Thiadiazolium-, Oxazolium-, Thiazolium-, Pyridinium-, Pyrimidinium-, Pyrazinium-Ring enthalten.

Die genannten Heterocyclen können gegebenenfalls substituiert und/oder mit aromatischen Ringen kondensiert sein. Ferner kommen auch kationische Farbstoffe der Diphenylmethan-, Triphenylmethan-, Oxazin-, Thiazin- und 1,2-Pyran-Reihe in Frage, sowie schliesslich auch Farbsalze der Arylazo-und Anthrachinonreihe.

Neben wasserlöslichen Farbstoffen kommen auch in Wasser schwerlösliche bis unlösliche Farbstoffe in Frage. Koloristisch gesehen handelt es sich hier beispielsweise um Schwefelfarbstoffe oder Pigmentfarbstoffe, vor allem jedoch um Dispersions- und in erster Linie um Küpenfarbstoffe, die chemisch den verschiedensten Klassen angehören.

Bei den Dispersionsfarbstoffen handelt es sich beispielsweise um von Carbon- und/oder Sulfonsäuregruppen freie Nitro-, Aminoketon-, Ketonimin-, Methin-, Polymethin-, Diphenylamin-, Chinolin-, Benzimidazol-, Xanthen-, Oxazin-, Aminonaphthochinon- oder Cumarinfarbstoffe und insbesondere um Anthrachinon- und Azofarbstoffe, wie Mono- oder Disazofarbstoffe. Bei den Küpenfarbstoffen handelt es sich um Farbstoffe, die in fester, dispergierter Form auf das Gewebe aufgebracht werden und nach dem Entwickeln wieder in wasserunlöslicher Form vorliegen.

Nach dem erfindungsgemässen Verfahren können neben Einzelfarbstoffen natürlich auch Farbstoffmischungen granuliert werden, wobei auch Kombinationen von in Wasser unlöslichen bzw. schwerlöslichen Farbstoffen mit wasserlöslichen Farbstoffen in Frage kommen, sofern die Granulate zum Färben von Mischgewebe z.B. aus Polyester/Baumwolle verwendet werden sollen.

Als Photoaktivatoren kommen vorzugsweise metallisierte Phthalocyanine, insbesondere Aluminium- und Zinkphthalocyanine in Betracht.

Die erfindungsgemäss verwendbaren Farbstoffe und Photoaktivatoren sind bekannt und können nach an sich bekannten Methoden hergestellt werden.

Insbesondere wird das vorliegende Verfahren zur Granulierung von optischen Aufhellern angewendet, welche den verschiedensten chemischen Klassen angehören können. In Frage kommen wasserlösliche sowie in Wasser schwerlösliche bis unlösliche, amphotere, anionische oder kationische Aufheller beispielsweise aus der Klasse der Distyrylbenzole oder -biphenyle, Cumarine, Benzocumarine, Pyrazine, Pyrazoline, Oxazine, Mono- oder Dibenzoxazolyl-, Mono- oder Dibenzimidazolylverbindungen sowie Naphthalsäureimide, Styrol-, Naphthotriazol- und v-Triazol-Derivate, insbesondere auch Stilbenverbindungen, wie Cyanurderivate der 4,4′-Diaminostilben-2,2′-disulfonsäure.

Die erfindungsgemäss verwendbaren optischen Aufheller sind bekannt (z.B. EP-A-59 684, DE-A-2 159 469, EP-19078) und können nach bekannten Methoden hergestellt werden.

Eingesetzt werden die Farbstoffe, optischen Aufheller oder Photoaktivatoren in Mengen von 98 bis 5 Gewichtsprozent, bezogen auf den Feststoffgehalt, vorzugsweise 90 bis 45 % und insbesondere 85 bis 60 %, z.B. in Form des wasserfeuchten Presskuchens, der Syntheselösung oder -suspension, der aufkonzentrierten wässrigen Zubereitung, der Syntheseschmelze, als wasserhaltiges Oel oder auch als trockenes Pulver.

Als weitere Komponente enthält die zu versprühende Suspension 1 bis 30 Gewichtsprozent, bezogen auf den Feststoffgehalt, vorzugsweise 1 bis 20 % und insbesondere 1 bis 10 % eines Kondensationsproduktes mit geringem Salzgehalt aus Naphthalinsulfonsäure und Formaldehyd, wie z.B. das Natriumsalz und/oder Kaliumsalz des Kondensationsprodukts von Naphthalin-sulfonsäure mit Formaldehyd der Formel

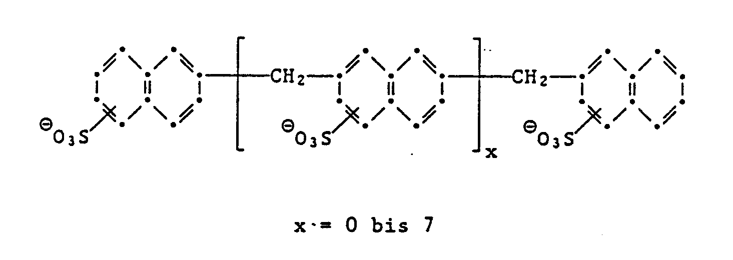

Ferner enthält die Suspension organische Salze wie z.B. Natriumacetat und/oder anorganische Salze wie z.B. Natriumchlorid, Lithiumchlorid, Ammoniumchlorid, Natriumcarbonat, Natriumhydrogencarbonat, Mono-, Di-oder Trinatriumphosphat, Dinatriumhyydrogenphosphat, Natriumtripolyphosphat, Polyphosphate, Natriumnitrat, Natriumsulfat, Ammoniumsulfat, Kaliumsulfat, Lithiumsulfat, Natriumhydrogensulfat. Bevorzugt sind die Natrium-, Kalium- und Ammoniumsulfate und -chloride. Die Salze werden beispielsweise in Mengen von 1 bis 50 Gewichtsprozent, vorzugsweise in Mengen von 2 bis 40 Gewichtsprozent, insbesondere 5 bis 30 % und vor allem 15 bis 30 % bezogen auf den Feststoffgehalt eingesetzt.

Je nach Wassergehalt der eingesetzten Komponenten benötigt man noch mehr oder weniger Wasser um einen Feststoffanteil in der Suspension von grösser/gleich 30 % einzustellen. Demnach wird die Ausgangsmischung vor der Sprühtrocknung bzw. Zerstäubung gegebenenfalls mit Wasser versetzt. Der Feststoffgehalt der Suspension beträgt vorzugsweise 30 % bis 70 %.

Insbesondere beträgt er 40 % bis 70 % und vor allem 45 % bis 60 % für die Suspension eines Aufhellers und 30 % bis 45 % für die Farbstoff-Suspensionen. Die Suspension lässt sich bei Temperaturen von 20 bis 50°C gut pumpen und problemlos versprühen.

Zusatzlich können weitere oberflächenaktiven Substanzen einzeln oder im Gemisch eingesetzt werden. Sie werden im allgemeinen in Mengen von 1 bis 10 Gewichtsprozent, bezogen auf den Farbstoffgehalt, vorzugsweise 1 bis 5 % verwendet.

In Frage kommen beispielsweise: Netz- oder Dispergiermittel anionischer, kationischer oder nichtionogener Natur, wie Ligninsulfonat, Dinaphthylmethandisulfonsäure, Natrium-dioctyl-sulfosuccinat, Dibutylnaphthalinsulfonat, Dodecylbenzolsulfonat, Laurylpyridiniumchlorid, Alkylphenolpolyglykoläther, Stearyl-diphenyl-oxäthyldiäthylentriamin und Aethylenoxid-Addukte.

Bevorzugt sind anionische oberflächenaktive Substanzen wie Kondensationsprodukte aromatischer Sulfonsäuren mit Formaldehyd z.B. Kondensationsprodukte aus Formaldehyd, Naphthalinsulfonsäure und Benzolsulfonsäure, oder aus Rohkresol, Formaldehyd und Naphthalinsulfonsäure, sowie vor allem Kondensationsprodukte aus Phenol-, Kresol- oder Naphthol-sulfonsäure und Formaldehyd, und insbesondere Ligninsulfonate (Sulfit- Celluloseablauge) und Oxyligninsulfonate; ferner Polymerisationsprodukte von ungesättigten Säuren wie das Polymerisationsprodukt der Acrylsäure bzw. Methacrylsäure der Formel

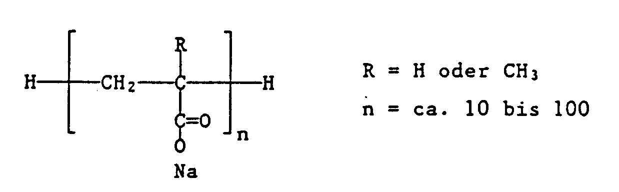

Vorteilhaft hat sich der Einsatz von nichtionogenen Tensiden erwiesen. Als nichtionogene Tenside kommen vor allem in Betracht:
Polyäthylenglykole mit einem Molekulargewicht von vorzugsweise 200 bis 1000;
Mischpolymerisate aus Aethylenoxid und Propylenoxid (sog. Blockpolymerisate);
Symmetrische Acetylene, z.B. die tertiäre Acetylenglykol-Verbindung der Formel

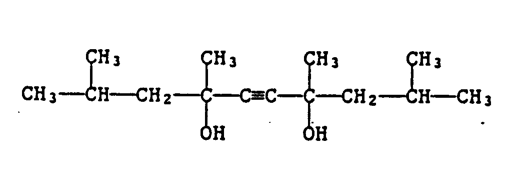

Umsetzungsprodukte aus Fettsäuren mit 8 bis 22 Kohlenstoffatomen und Aminen oder Hydroxyalkylaminen, wie z.B. Cocosfettsäureamid, Oelsäurediäthanolamid oder Cocosfettsäureäthanolamid.

Besonders vorteilhaft haben sich Anlagerungsprodukte erwiesen, aus z.B. 5 bis 200 Mol, vorzugsweise 20 bis 100 Mol Alkylenoxiden, insbesondere von Aethylenoxid, wobei einzelne Aethylenoxideinheiten durch substituierte Epoxide, wie Styroloxid und/oder Propylenoxid, ersetzt sein können, angelagert an höhere Fettsäuren, vorzugsweise mit 8 bis 22 Kohlenstoffatomen, beispielsweise Anlagerungsprodukte aus Fettsäuren (z.B. Oelsäure oder Ricinolsäure) und 10 bis 30 Mol Aethylenoxid, vorzugsweise ein Anlagerungsprodukt aus Oelsäure und 20 Mol Aethylenoxid, oder ein Ricinolsäureester mit 15 Mol Aethylenoxid, oder Anlagerungsprodukten der Alkylenoxide an gesättigte oder ungesättigte Alkohole, Mercaptane oder Amine mit 8 bis 20 Kohlenstoffatome oder an Alkylphenole oder Alkylthiophenole, deren Alkylrest mindestens 7 Kohlenstoffatome aufweisen, beispielsweise Fettalkoholpolyglykoläther, besonders solche aus einem 8 bis 22 Kohlenstoffatome aufweisenden aliphatischen Kohlenwasserstoffrest veräthert mit 5 bis 200 Mol, vorzugsweise mit 20 bis 100 Mol Aethylenoxid, wie Cetylalkohol veräthert mit 25 Mol Aethylenoxid, Stearylalkohol veräthert mit 25 bis 80 Mol Aethylenoxid und Oleylalkohol veräthert mit 20 bis 80 Mol Aethylenoxid; sowie Hydroabietylalkohol veräthert mit 25 bis 100 Mol Aethylenoxid, oder p-Nonylphenol veräthert mit 9 Mol Aethylenoxid.

Die aliphatischen Kohlenwasserstoffreste der Fettalkoholpolyglykoläther leiten sich von höheren Alkoholen mit 8 bis 22 Kohlenstoffatomen ab, wie z.B. Decyl-, Lauryl-, Tridecyl-, Myristyl-, Cetyl-, Stearyl-, Oleyl-, Arachidyl- oder Behenylalkohol.

Geeignete höhere Fettsäuren mit 8 bis 22 Kohlenstoffatomen sind z.B. Capryl-, Caprin-, Laurin-, Myristin-, Palmitin-, Stearin-, Arachin-, Behen-, Kokosfett- (C₈-C₁₈), Decen-, Dodecen-, Tetradecen-, Hexadecen-, Olein-, Linol-, Linolen-, Ricinolein-, Eikosen-, Dokosen- oder Clupanodonsäure.

Neben diesen oberflächenaktiven Substanzen können als weitere Hilfsmittel in Gesamtmengen von 1 bis 50 Gewichtsprozent, vorzugsweise 1 bis 30 % bezogen auf den Feststoffgehalt, Wasserenthärtungsmittel, Entschäumer, Bindemittel und/oder Löslichkeitsverbesserer sowie gegebenenfalls 0,5 bis 10 Gewichtsprozent, vorzugsweise 0,5 bis 5 % bezogen auf den Feststoffgehalt, Entstäubungsmittel, verwendet werden. Diese Mittel sollen die Eigenschaft haben, unter den vorgegebenen Bedingungen trocknungsfähig zu sein, ferner dürfen sie nicht mit den Farbstoffen, optischen Aufhellern oder Photoaktivatoren in Wechselwirkung treten.

Als Beispiele geeigneter erfindungsgemäss verwendbarer Bindemittel sind genannt:
Saccharose, Alginate, Gelatine, Glycerin, Glykole, Carboxymethylcellulose, Polyvinylpyrrolidone, Polyvinylalkohole sowie Stärke und Stärkeabbauprodukte, die mindestens fünf Hydroxygruppen pro Molekül enthalten, wie Sorbit, Hydratdextrose, Glukose, Milchzucker, Mannit, Knochenleim, Mannose oder vorzugsweise Dextrin. Sie werden vorzugsweise in Mengen von 1 bis 40 Gewichtsprozent, insbesondere 1 bis 20 % bezogen auf den Feststoffgehalt, verwendet.

Als Entstäubungsmittel kommen die üblichen in Frage wie z.B. homogene Mischungen von Mineralölen und Emulgatoren mit unbegrenzter Emulgierfähigkeit mit Wasser z.B. Paraffinöl und Mineralöle, gegebenenfalls emulgiert mit geeigneten Emulgatoren z.B. Fettsäure(-alkohol)-Aethylenoxidaddukten, insbesondere ein Gemisch aus Mineralöl bzw. Mineralölsulfonsäure und einem Emulgator oder aus Paraffinöl und einem nichtionischen Emulgator. Das Entstäubungsmittel kann auch nachträglich auf das sprühgetrocknete Produkt aufgebracht werden.

Als erfindungsgemäss verwendbare Löslichkeitsverbesserer sind Harnstoff, Tetramethylharnstoff, Caprolactam, Glycin, Trimethylbetain, Toluolsulfonsäure, Xylolsulfonsäure oder Dodecylbenzolsulfonsäure bzw. deren Salze insbesondere Natriumsalze sowie Hilfsmittel mit verstärkter Hydrotropiewirkung wie die in der DE-OS 28 02 327 beschriebenen Hilfsmittelmischungen zu nennen. Der Löslichkeitsverbesserer wird vorzugsweise in Mengen von 1 bis 20 Gewichtsprozent, bezogen auf den Feststoffgehalt, verwendet.

Zur Sprühtrocknung oder auch Zerstäubungstrocknung wird die Suspension über Drallkammerdüsen und mit einem Speisedruck von 20-150 bar, im Fall der Aufheller-Suspensionen vorzugsweise 60-120 bar und insbesondere 60-100 bar im Fall der Farbstoff-Suspensionen vorzugsweise 20-35 bar in einen Trockenturm gepresst.

Die Gaseingangstemperatur des Trockners liegt bei 150 bis 450°C, im Fall der Aufheller-Suspensionen vorzugsweise 350 bis 400°C, im Fall der Farbstoff-Suspensionen vorzugsweise 150-200°C, die Gasaustrittstemperatur bei 80 bis 120°C, vorzugsweise 90 bis 110°C, dabei bewegt sich das zerstäubte Trockengut vorzugsweise in Richtung der Trocknungsluft (Gleichstromführung). Als Gas kommt vor allem Luft in Frage.

Die Trocknung wird so gestaltet, dass die Produktrestfeuchte unter 4 % liegt und die Produkttemperatur nicht über einen spezifischen kritischen Grenzwert steigt, oberhalb dessen das Granulat irreversible Veränderungen erleidet.

In einer besonders bevorzugten Ausführungsform wird die wässrige Aufheller-Suspension mit einem Feststoffgehalt von 50 % bei einem Speisedruck von 60-90 bar, einer Gasein.trittstemperatur von 350-400°C und einer Gasaustrittstemperatur von 90-110°C bis zu einer Restfeuchte von ≦ 3% sprühgetrocknet.

Nach diesem Trocknungsverfahren können Granulate mit einer Korngrösse bis 1000 µm erhalten werden, vorzugsweise liegt die Korngrösse im Bereich von 100 bis 300 µm. In einer bevorzugten Ausführungsform wird der Feinanteil mit einer Teilchengrösse unter 50 µm z.B. über Zyklone abgetrennt und recyclisiert.

Die erfindungsgemässen Granulate sind besonders geeignet zur Herstellung von wässrigen Färbeflotten bzw. Aufhellerflotten und Druckpasten, welche zum Färben, Bedrucken, Bleichen und Aufhellen der verschiedensten Textilmaterialien verwendet werden können.

Die folgenden Beispiele dienen zur Erläuterung der Erfindung; Teile bedeuten Gewichtsteile und Prozente Gewichtsprozente.

### Druckbeständigkeitstest

Auf einen Glasobjektträger (7,5x2,5 cm) wird ein doppelseitig klebendes Klebeband (1,2x1,3 cm) geklebt. Darauf wird eine Schicht Granulat von ungefähr gleichem Durchmesser aufgetragen und mit einem weiteren Objektträger abgedeckt. Dieses "Sandwich" legt man auf eine Glasplatte (25x15 cm) und belastet es vorsichtig 15 s mit einem 2 kg-Gewicht. Eine weitere Belastungsprobe wird auf der Hälfte der Fläche (0,6x0,65 cm) durchgeführt. Nach Entfernung des oberen Objektträgers werden die Granulate unter dem Mikroskop mit ca. 12,5-facher Vergrösserung betrachtet, die Anzahl der zerstörten Granulate - auch diejenigen, die eine Einbuchtung aufweisen -geschätzt und in % angegeben.

### Abriebtest

In einem Trommelrotationsapparat versehen mit Fallschikanen lässt man 40 g Farbstoff-Granulat mit 25 U/Min. während 200 Minuten rotieren. Nach der Rotation wird der Abrieb visuell beurteilt. Die Prüfsubstanz wird aus der Trommel in ein Becherglas umgefüllt und daraus entnimmt man 2 Proben à 10 g für die Staubtestprüfung. Der Stäubetest wird nach der Trichtermethode im Vergleich zu unbehandelter Substanz durchgeführt.

### Beispiel 1

16'565 kg des optischen Aufhellers der Formel 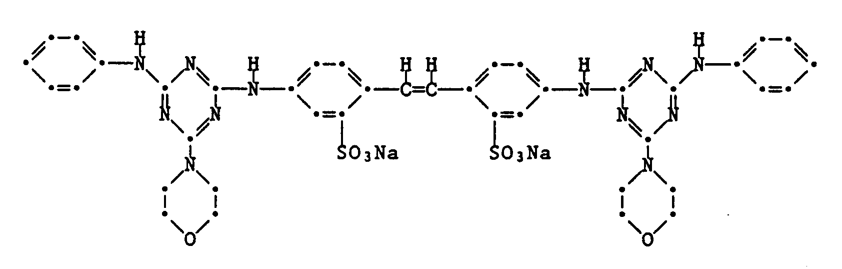
werden in Form des wässrigen Presskuchens (Feststoffgehalt 60 %) mit 6'955 l Wasser, 3'360 kg Natriumsulfat und 280 kg Kondensationsprodukt aus Naphthalinsulfonsäure und Formaldehyd Na-Salz (Dispergator) angeschlämmt, auf eine Slurrytemperatur von 30 bis 40°C und mittels NaOH auf einen pH-Wert von 8 bis 10 eingestellt und in einem zylindrischen Trockenturm (Höhe 11,4 m; Durchmesser 4,5 m), ausgerüstet mit 6 Drallkammerdüsen, zerstäubungsgetrocknet. Der Feststoffgehalt der Suspension beträgt 50 %.

| | |
|---|---|
| Speisedruck | 65-75 bar |
| Lufteintrittstemperatur | 400°C |
| Luftaustrittstemperatur | 100°C |
| Trocknungsluftmenge | ca. 10'000 Nm³/h |
| Wasserverdampfung | 1'000 kg/h |
| Produktrestfeuchte | 3 % |

Man erhält 11'900 kg Granulat - der aus der Abluft abgeschiedene Feinanteil (ca. 15 %) wird recyclisiert - einer sehr guten Druckstabilität. Gemäss dem Druckbeständigkeitstest bleiben 75 % der Granulate unzerstört. (Mittelwert zweier Bestimmungen jeweils der ganzen und der halben Fläche)

### Beispiel 2

4970 kg trockener Rohfarbstoff der Formel 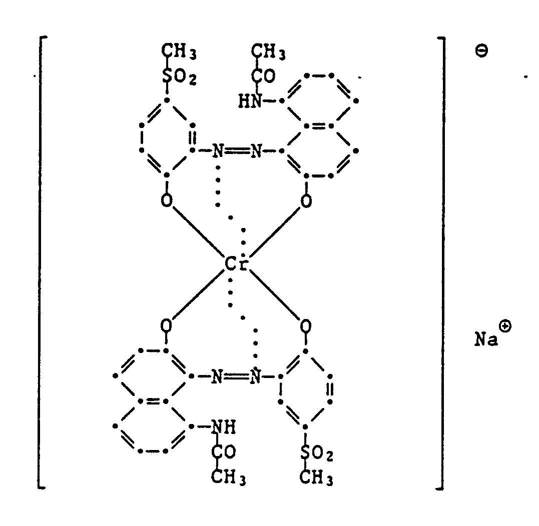
werden als Feuchtware (= 15061 kg Presskuchen, Feststoffgehalt 33 %) mit
887 kg Kondensationsprodukt aus Naphthalin-Sulfonsäure und Formaldehyd Na-Salz (Dispergator),
285 kg 1-Benzyl-2-heptadecylbenzimidazol-disulfonsäure Na-Salz und
510 kg Additionsprodukt aus 4-Nonylphenol und 9,7 mol Ethylenoxid intensiv vermischt. Feststoffgehalt der Anschlämmung: 39,7 %.

Der suspendierte Farbstoff wird über eine Glasperlen-Mühle (Perlendurchmesser 2 mm) auf eine Teilchenfeinheit von 1-3 µm gemahlen.

Sollte beim Anschlämmen oder bei der Nassmahlung die Viskosität zu hoch sein, so kann die Suspension mit Wasser verdünnt werden.

Nach der Nassmahlung wird die Suspension über ein Sieb (Maschenweite 200 µm) gesiebt und auf Handelsformstärke eingestellt. Anschliessend wird die Suspension auf dem Düsenzerstäuber, der in Beispiel 1 beschrieben ist, bei einer Lufteintrittstemperatur von 170°C und einer Luftaustrittstemperatur von 100°C zerstäubungsgetrocknet. Die übrigen Bedingungen entsprechen den Angaben von Beispiel 1.

Es werden 4830 kg Farbstoffgranulat, das eine gute Druckstabilität aufweist, erhalten. Granulatrestfeuchte: 3,9 Gew.-%. Der Feinanteil (Teilchengrösse < 60 µm), der aus der Abluft geschieden wird, wird rezykliert.

Beurteilung des Farbstoffgranulats gemäss Abriebtest: Staubnote 4-5 (gut-sehr gut).

### Beispiel 3

Der Küpenfarbstoff der Formel 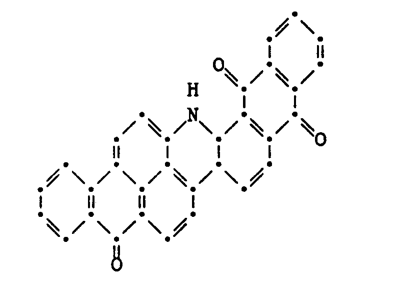
wird entsprechend dem in Beispiel 2 beschriebenen Verfahren standardisiert. Die hierbei eingesetzten Mengen betragen 3654 kg Rohfarbstoff, 1106 kg Kondensationsprodukt aus Naphthalinsulfonsäure und Formaldehyd Na-Salz und 2279 kg Ligninsulfonat Na-Salz. Die Restfeuchte des Granulates beträgt 3,9 %.

Hierbei wird ein Farbstoffgranulat erhalten, das eine gute Granulatstabilität gemäss dem Abriebtest zeigt.

Beurteilung gemäss Abriebtest: Staubnote 4-5 (gut-sehr gut).

### Beispiel 4

Der Dispersionsfarbstoff der Formel 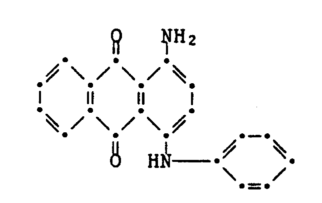
wird entsprechend dem in Beispiel 2 beschriebenen Verfahren standardisiert. Die Formulierung wird soweit geändert, dass man 1658 kg Rohfarbstoff, 2183 kg Kondensationsprodukt aus Naphthalinsulfonsäure und Formaldehyd Na-Salz und 81 kg 1-Benzyl-2-heptadecylbenzimidazol-disulfonsäure Na-Salz einsetzt. Die Restfeuchte des Granulates beträgt 3,9 %.

Das erhaltene Farbstoffgranulat zeigt eine gute Granulatstabilität gemäss dem Abriebtest.

Beurteilung gemäss Abriebtest: Staubnote 4-5 (gut-sehr gut).

### Beispiel 5

3240 kg Rohfarbstoff (Trockengewicht) der Formel 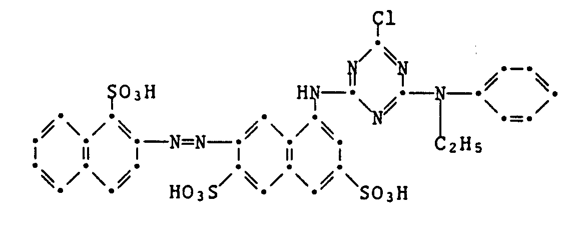
werden als Presskuchen in einer wässrigen Lösung, die
428 kg Kondensationsprodukt aus Naphthalinsulfonsäure und Formaldehyd Na-Salz und
270 kg Natriumchlorid enthält,
angeschlämmt.
- Gewicht der Anschlämmung :: 12400 kg
- Feststoffgehalt der Anschlämmung:: 33,3 %.

Zur Homogenisierung wird die Anschlämmung durch einen Dispersierapparat (Trigonal-Mühle®, Supraton®, Gorator® oder Dispax®) solange gepumpt, bis alle suspendierten Teilchen kleiner als 100 µm sind.

Die Zerstäubungstrocknung wird auf dem Düsenzerstäuber, der in Beispiel 1 beschrieben ist, unter folgenden Bedingungen durchgeführt:

| | |
|---|---|
| Speisedruck | 20 bar |
| Lufteintrittstemperatur | 190°C |
| Luftaustrittstemperatur | 92°C |
| Granulat-Restfeuchte | 3,9 % |

Nach der Zerstäubungstrocknung werden 3650 kg Granulat erhalten. Das Granulat Zeigt eine gute Druckstabilität, die über den Abriebtest beurteilt wird.

Beurteilung gemäss Abriebtest: Staubnote 4-5 (gut-sehr gut).
Der Staubanteil wird bei der nachfolgenden Anschlämmung wiederverwertet.

## Patentansprüche

1. Verfahren zur Herstellung von Granulaten durch Sprühtrocknung einer wäßrigen Suspension enthaltend mindestens einen Farbstoff, optischen Aufheller oder Photoaktivator, anorganische und/oder organische Salze und ein Kondensationsprodukt aus Naphthalinsulfonsäure und Formaldehyd als Dispergator sowie gegebenenfalls weitere Hilfs- und/oder Coupagemittel, **dadurch gekennzeichnet,** daß
a) die Suspension mindestens 1 bis 30 Gew.-%, bezogen auf den Feststoffgehalt des Dispergators, enthält,
b) der Feststoffgehalt der Suspension 30-70% beträgt,
c) die Trocknungstemperaturen so gewählt werden, daß die Restfeuchte der erhaltenen Granulate unter 4% liegt,
d) der Speisedruck 20-150 bar beträgt,
e) zur Sprühtrocknung Drallkammerdüsen verwendet wer-den und
f) die wäßrige Suspension frei von Poly-(vinylalkohol), Poly(N-vinyl-α-pyrrolidon) oder Alkalimetallsalzen einer Polyacryl- oder Polymethacrylsäure mit einem durchschnittlichen Molekulargewlcht von mindestens 10000 ist.

2. Verfahren gemäß Anspruch 1, **dadurch gekennzeichnet,** daß die Suspension organische und/oder anorganische Salze in Mengen von 1 bis 50 Gewichtsprozent, bezogen auf den Feststoffgehalt, enthält.

3. Verfahren gemäß Anspruch 1, **dadurch gekennzeichnet,** daß der Feststoffgehalt der wäßrigen Suspension mit einem Aufheller 40-70% beträgt.

4. Verfahren gemäß Anspruch 1, **dadurch gekennzeichnet,** daß der Feststoffgehalt der wäßrigen Suspension mit einem Aufheller 45-60% beträgt.

5. Verfahren gemäß Anspruch 1, **dadurch gekennzeichnet,** daß der Feststoffgehalt der wäßrigen Suspension mit einem Farbstoff 30-45% beträgt.

6. Verfahren gemäß Anspruch 1, **dadurch gekennzeichnet,** daß im Fall der Aufheller-Suspension der Speisedruck 60-120 bar beträgt.

7. Verfahren gemäß Anspruch 1, **dadurch gekennzeichnet,** daß im Fall der Farbstoff-Suspensionen der Speisedruck 20-35 bar beträgt.

8. Verfahren gemäß Anspruch 1, **dadurch gekennzeichnet,** daß die Gaseintrittstemperatur 150°C bis 450°C und die Gasaustrittstemperatur 80°C bis 120°C beträgt.

9. Verfahren gemäß Anspruch 1, **dadurch gekennzeichnet,** daß im Fall der Aufheller-Suspensionen die Gaselntrittstemperatur 350°C bis 400°C und die Gasaustrittstemperatur 90°C bis 110°C beträgt.

10. Verfahren gemäß Anspruch 1, **dadurch gekennzeichnet,** daß im Fall der Farbstoff-Suspensionen die Gaseintrittstemperatur 150°C bis 200°C und die Gasaustrittstemperatur 90°C bis 110°C beträgt.

11. Verfahren gemäß mindestens einem der Ansprüche 1 bis 7, **dadurch gekennzeichnet,** daß die Gas- und Produktströme sich im Gleichstrom bewegen und daß der Feinanteil abgetrennt und recyclisiert wird.

12. Verfahren gemäß Anspruch 1, **dadurch gekennzeichnet,** daß eine wäßrige Suspension enthaltend einen Aufheller mit einem Feststoffgehalt von 50% mit einem Speisedruck von 60-90 bar, bei einer Gaseintrittstemperatur von 350-400°C und einer Gasaustrittstemperatur von 90-110°C sprühgetrocknet wird und die Produktrestfeuchte ≦ 3% beträgt.

13. Die nach dem Verfahren gemäß Anspruch 1 erhältlichen Granulate.

14. Verwendung der gemäß Anspruch 1 erhältlichen Granulate zum Färben und Bedrucken, Bleichen oder optischen Aufhellen von Textilmaterialien.

## Claims

1. A process for the preparation of granules by spray-drying of an aqueous suspension containing at least one dye, fluorescent brightener or photoactivator, inorganic and/or organic salts and a condensation product from naphthalenesulfonic acid and formaldehyde as dispersant and, if necessary, further auxiliaries and/or diluents, wherein
a) the suspension contains at least 1 to 30 % by weight, relative to the solids content, of the dispersant,
b) the solids content of the suspension is from 30-70 %,
c) the drying temperatures selected are such that the residual moisture content of the granules obtained is less than 4 %,
d) the feed pressure is 20-150 bar,
e) swirl chamber nozzles are used for the spay-drying, and
f) the aqueous suspension is free from poly(vinyl alcohol), poly(N-vinyl-α-pyrrolidone) or alkali metal salts of a polyacrylic or polymethacrylic having an average molecular weight of at least 10,000.

2. A process according to claim 1, wherein the suspension contains organic and/or inorganic salts in amounts of 1 to 50 per cent by weight, relative to the solids content.

3. A process according to claim 1, wherein the solids content of the aqueous suspension containing a brightener is 40-70 %.

4. A process according to claim 1, wherein the solids content of the aqueous suspension containing a brightener is 45-60 %.

5. A process according to claim 1, wherein the solids content of the aqueous suspension containing a dye is 30-45 %.

6. A process according to claim 1, wherein in the case of the brightener suspensions the feed pressure is 60-120 bar.

7. A process according to claim 1, wherein in the case of the dye suspensions the feed pressure is 20-35 bar.

8. A process according to claim 1, wherein the gas inlet temperature is 150°C to 450°C and the gas outlet temperature is 80°C to 120°C.

9. A process according to claim 1, wherein in the case of the brightener suspensions the gas inlet temperature is 350°C to 400°C and the gas outlet temperature is 90°C to 110°C.

10. A process according to claim 1, wherein in the case of the dye suspensions the gas inlet temperature is 150°C to 200°C and the gas outlet temperature is 90°C to 110°C.

11. A process according to at least one of claims 1 to 7, wherein the gas and product streams are moving in co-current and the fines are separated off and recycled.

12. A process according to claim 1, wherein an aqueous suspension containing a brightener having a solids content of 50 % is spray-dried at a feed pressure of 60-90 bar, a gas inlet temperature of 350-400°C and a gas outlet temperature of 90-110°C and the residual moisture content of the product is ≦ 3 %.

13. Granules obtainable by the process according to claim 1.

14. Use of the granules obtainable according to claim 1 for the dyeing and printing, whitening or fluorescent brightening of textile materials.

## Revendications

1. Procédé de préparation de granulés par séchage par pulvérisation d'une suspension aqueuse contenant au moins un colorant, un agent d'azurage optique ou un photoactiveur, des sels minéraux et/ou organiques et un produit de condensation d'acide naphtalènesulfonique et de formaldéhyde, en tant que dispersant, ainsi que, éventuellement, d'autres produits auxiliaires et/ou diluants, caractérisé en ce que :
a) la suspension contient au moins 1 à 30 % en poids, rapportés à la teneur en produit solide, du dispersant,
b) la teneur en produit solide de la suspension s'élève à 30 à 70 %,
c) la température de séchage est choisie de telle manière que l'humidité restante des granulés obtenus soit inférieure à 4 %,
d) la pression d'alimentation s'élève à 20 à 150 bar,
e) pour le séchage par pulvérisation, on utilise des buses à chambre de giration, et
f) la suspension aqueuse est exempte de poly(alcool vinylique), poly(N-vinyl-α-pyrrolidone) ou sels de métal alcalin de poly(acide acrylique) ou poly(acide méthacrylique), ayant une masse moléculaire moyenne d'au moins 10 000.

2. Procédé selon la revendication 1, caractérisé en ce que la suspension contient des sels organiques et/ou minéraux en une quantité de 1 à 50 % en poids, rapportée à la teneur en produit solide.

3. Procédé selon la revendication 1, caractérisé en ce que la teneur en produit solide de la suspension aqueuse renfermant un agent d'azurage s'élève à 40 à 70 %.

4. Procédé selon la revendication 1, caractérisé en ce que la teneur en produit solide de la suspension aqueuse renfermant un agent d'azurage s'élève à 45 à 60 %.

5. Procédé selon la revendication 1, caractérisé en ce que la teneur en produit solide de la suspension aqueuse renfermant un colorant s'élève à 30 à 45 %.

6. Procédé selon la revendication 1, caractérisé en ce que, dans le cas de la suspension d'agent d'azurage, la pression d'alimentation s'élève à 60 à 120 bar.

7. Procédé selon la revendication 1, caractérisé en ce que, dans le cas de la suspension de colorant, la pression d'alimentation s'élève à 20 à 35 bar.

8. Procédé selon la revendication 1, caractérisé en ce que la température d'entrée du gaz est de 150°C à 450°C et la température de sortie du gaz est de 80°C à 120°C.

9. Procédé selon la revendication 1, caractérisé en ce que, dans le cas des suspensions d'agents d'azurage, la température d'entrée du gaz est de 350°C à 400°C et la température de sortie du gaz est de 90°C à 110°C.

10. Procédé selon la revendication 1, caractérisé en ce que, dans le cas des suspensions de colorants, la température d'entrée du gaz est de 150°C à 200°C et la température de sortie du gaz est de 90°C à 110°C.

11. Procédé selon l'une quelconque des revendications 1 à 7, caractérisé en ce que les courants de gaz et de produits se déplacent dans le même sens, et que les parties fines sont séparées et recyclées.

12. Procédé selon la revendication 1, caractérisé en ce que l'on sèche par pulvérisation une suspension aqueuse contenant un agent d'azurage, ayant une teneur en produit solide de 50 %, en utilisant une pression d'alimentation de 60 à 90 bar, une température d'entrée du gaz de 350 à 400°C et une température de sortie du gaz de 90 à 110°C, l'humidité restante du produit étant inférieure ou égale à 3 %.

13. Les granulés préparables par le procédé selon la revendication 1.

14. Utilisation des granulés préparables par le procédé selon la revendication 1, pour la teinture, l'impression, le blanchiment ou l'azurage optique de matières textiles.
